# EUROPÄISCHE PATENTSCHRIFT

(11) **EP 0 521 844 B1**
(45) Veröffentlichungstag und Bekanntmachung des Hinweises auf die Patenterteilung: **20.12.1995**
(21) Anmeldenummer: 92890155.2
(22) Anmeldetag: 25.06.1992
(51) Int. Cl.: C21C 5/56, C22B 7/00

(54) **Verfahren zur energetischen Nutzung von Schreddermüll**
Process for the energetic utilization of the waste from shredded scrap
Procédé pour l'utilisation énergétique de déchets de ferraille déchiquetée

(30) Priorität: 28.06.1991 AT 1300/91
(43) Veröffentlichungstag der Anmeldung: 07.01.1993
(73) Patentinhaber: VOEST-ALPINE INDUSTRIEANLAGENBAU GMBH, 4020 Linz (AT); MERCEDES-BENZ AG, 70327 Stuttgart (DE)
(72) Erfinder: Nieder, Wolfgang, Dipl.-Ing., A-4040 Linz (AT); Seirlehner, Leo, Dipl.-Ing., A-4040 Linz (AT); Köller, Otto, Dipl.-Ing., A-8704 Donawitz (AT); Perchtold, Gerhard, A-1050 Wien (AT)
(74) Vertreter: Haffner, Thomas M., Dr.

(56) Entgegenhaltungen:
- EP-A- 0 278 221
- EP-A- 0 367 751
- WO-A-88/04013
- DE-A- 3 443 042
- DE-A- 3 941 868
- DE-B- 1 583 921

## Beschreibung

Die Erfindung bezieht sich auf ein Verfahren zur energetischen Nutzung von Schreddermüll in einem kontinuierlichen Schrottschmelzverfahren

Zum kontinuierlichen Einschmelzen von Schrott, Eisenschwamm, Roheisen od.dgl., sind bereits eine Reihe von Verfahren bekanntgeworden. Bei diesen bekannten Verfahren wird in einem Schachtofen Schrott geschmolzen, wobei eine Hochtemperaturschmelzzone mit Erdgas-Sauerstoffbrennern geschaffen wird.

Die bekannten Verfahren eignen sich nur für das Erschmelzen von Schrott, wobei der bei der Aufbereitung von Schrott entstehende Schreddermüll auf Grund seiner stark unterschiedlichen und streuenden Zusammensetzung gegenwärtig nicht ökonomisch verarbeitet werden kann. Schreddermüll wird daher zumeist deponiert. Die Deponie von Schreddermüll stellt eine bedeutende räumliche und ökologische Belastung dar, wobei insbesondere in Schreddermüll eine Reihe von Schadstoffen enthalten sind.

Gemäß einem nicht veröffentlichten älteren Vorschlag, kann Schreddermüll dahingehend nutzbar gemacht werden, daß der Schreddermüll einer thermischen Vorbehandlung unterworfen wird, wobei das bei der thermischen Zersetzung von Schreddermüll anfallende Gas als Heizgas Verwendung finden kann. Die energetische Nutzung der durch Zersetzung von Schreddermüll erhältlichen Gase, wie sie beispielsweise in Hochtemperaturvergasungsanlagen hergestellt werden können, erfolgt zumeist über Wärmetauscher und ist daher mit einem relativ schlechten Wirkungsgrad verbunden.

Die Erfindung zielt nun darauf ab, Schreddermüllanteile bei der Herstellung von Schrott in besserer Weise energetisch zu nutzen und gleichzeitig einen Teil der für das Schmelzen von Schrott erforderlichen Energie durch wärmetechnische Nutzung von Schreddermüll aufzubringen. Zur Lösung dieser Aufgabe besteht das erfindungsgemäße Verfahren im wesentlichen darin, daß der Schreddermüll auf eine Korngröße von unter 3 mm, vorzugsweise unter 2 mm, zerkleinert wird und gemeinsam mit einem Trägergas, wie z.B. Erdgas, Luft oder Stickstoff, in die Hochtemperaturschmelzzone des Schrottschmelzreaktors eingeblasen wird. Dadurch, daß Schreddermüll auf eine Korngröße von unter 3 mm, insbesondere unter 2 mm zerkleinert wird, läßt sich Schreddermüll unmittelbar mit einem Trägergas in die Schmelzzone eines Schrottschmelzreaktors einblasen und es wird auf diese Weise eine wesentlich vollständigere Umsetzung und wärmetechnische Nutzung von Schreddermüll ermöglicht. Mit Vorteil wird hiebei ein Trägergas wie beispielsweise Erdgas, Luft oder ein Inertgas wie Stickstoff eingesetzt, wobei die der jeweiligen Zusammensetzung des Schreddermülls entsprechenden Verbrennungsbindungen durch Dosierung des Schreddermülls und entsprechende Regelung des Verbrennungssauerstoffes eingestellt werden kann. Das Einblasen von auf diese Weise zerkleinertem Schreddermüll erlaubt eine genaue Dosierung der jeweils einzublasenden Menge an Schreddermüll, wobei das Einblasen selbst nach bekanntem Stand der Technik durchgeführt werden kann. Die Temperatur in der Flammzone der Einblasdüsen kann hiebei zwischen 2500 und 3000°C gehalten werden, so daß sich ein besonders guter Wirkungsgrad ergibt.

Mit Vorteil wird das erfindungsgemäße Verfahren so durchgeführt, daß das Einblasen über Ringdüsen vorgenommen wird, deren Düsenachsen zur Achse des Schrottschmelzreaktors nach unten geneigt verlaufen und mit einer Radialebene einen Winkel von 2 bis 10°, vorzugsweise etwa 7°, einschließen. Eine derartige Orientierung der Düsenachsen trägt dem Umstand Rechnung, daß die einzelnen Flammstrahlen relativ hohe Temperatur aufweisen und insbesondere bei Temperaturen zwischen 2500 und 3000°C die feuerfeste Ausmauerung des Reaktors beschädigen könnten. Durch die Orientierung der einzelnen Flammenstrahlen kann verhindert werden, daß die Flammenstrahlen direkt auf die feuerfeste Ausmauerung des Reaktors treffen und es kann gleichzeitig durch die entstehende Verwirbelung die thermische Umsetzung verbessert werden.

Bedingt durch die relativ hohen Verbrennungstemperaturen entstehen Verbrennungsabgase mit relativ hohem CO-Anteil. Um hier eine vollständige thermische Nutzung zu ermöglichen, wird mit Vorteil so vorgegangen, daß in den Schrottschmelzreaktor oberhalb der Ebene, in welcher der Schreddermüll eingeblasen wird, in einer Zone, in welcher die Temperatur unter 700°C liegt, Sekundärluft eingeblasen wird.

Das Zerkleinern von Schreddermüll kann je nach Ausgangsmaterial mit einer Reihe von Schwierigkeiten verbunden sein. Insbesondere ist es bei weichen Ausgangsmaterialien nicht ohne weiteres möglich diese in einer Prallmühle sicher zu zerkleinern. Um weiters das Zerkleinerungsaggregat nur in dem Ausmaß zu belasten, in welche eine Zerkleinerung der gesamten Schreddermüllmenge erforderlich ist, wird das erfindungsgemäße Verfahren mit Vorteil so geführt, daß der Schreddermüll vor der Zerkleinerung einer Sichtung und/oder Siebung unterworfen wird und die eine Korngröße größer 3 mm, vorzugsweise größer 2 mm, aufweisenden Fraktion in eine Spröd- und eine Weichfraktion getrennt wird, worauf die Sprödfraktion in einer Mühle zerkleinert wird und die Weichfraktion zusätzlich vor oder während der Zerkleinerung, beispielsweise mit flüssigem Stickstoff gekühlt wird. Dadurch, daß die Weichfraktion unter Kühlung insbesondere durch Verwendung von flüssigem Stickstoff, zerkleinert wird, gelingt es auch Weichfraktionen mit konventionellen Mühlen entsprechend zu zerkleinern.

Um die für die Verbrennung und vollständige Umsetzung des Schreddermülls erforderlichen Parameter bei gleichzeitig entsprechend hoher Temperatur in der Einschmelzzone des Schrottschmelzreaktors den jeweiligen Erfordernissen anpassen zu können, wird mit Vorteil so vorgegangen, daß als Düsen für das Einblasen des Schreddermülls Manteldüsen eingesetzt werden, wobei der Schreddermüll über ein zentrales Rohr, Sauerstoff über ein erstes konzentrisches Rohr und weiterer gasförmiger Brennstoff über ein weiteres konzentrisches Rohr eingeblasen wird. Wenn, wie es einer weiteren bevorzugten Ausführungsform des erfindungsgemäßen Verfahren entspricht, hiebei so vorgegangen wird, daß in wenigstens einem der das zentrale Rohr umgebenden Rohre der Schreddermühl durch Drallkörper durchwirbelt wird, wird gleichzeitig mit einer guten Durchwirbelung eine weitestgehend vollständige Verbrennung gewährleistet. Auf Grund der hohen erzielbaren Flammtemperatur wird der eingesetzte Schrott in unmittelbarer Umgebung der Düsen einem "Schockschmelzen" unterworfen und es bilden sich um die Einblasdüsen relativ kleine Kavernen aus, in welche Schmelzkanäle münden. Auf diese Weise bleibt das Schrottbett in ständiger Bewegung und es kann aus dem Reaktor flüssige Schlacke zusammen mit dem Metallschmelze kontinuierlich abgezogen werden.

Bei Versuchen hat sich gezeigt, daß durch das Einblasen von Schreddermüll 55 bis 60 % der für das Schmelzen erforderliche Energie aufgebracht werden können. Der Heizwert des Schreddermülls wird daher zu einem hohen Anteil als Ersatz für Fosilenergie genutzt, wobei die Abgasmenge von Schmelzprozessen und Schreddermüllverbrennung beispielsweise in einer Hochtemperaturvergasungsanlage durch die Zusammenlegung der beiden thermischen Prozesse wesentlich verringert wird. Insgesamt ergibt sich daraus eine Vereinfachung der Abgasbehandlung und in Summe eine geringere, den ökologischen Erfordernissen entsprechend zu behandelnde Abgasmenge.

Die Erfindung wird nachfolgend an Hand eines in der Zeichnung schematisch dargestellten Ausführungsbeispieles näher erläutert. In dieser zeigen Fig.1 eine schematische Darstellung einer Anlage zur Durchführung des erfindungsgemäßen kontinuierlichen Schrottschmelzverfahrens, Fig.2 eine Detailzeichnung der Anlage zum Vermahlen des Schredderschrottes und Fig.3 eine schematische Darstellung des unteren Teiles des Schrottschmelzreaktors mit den Einblasdüsen für den gemahlenen Schredderschrott.

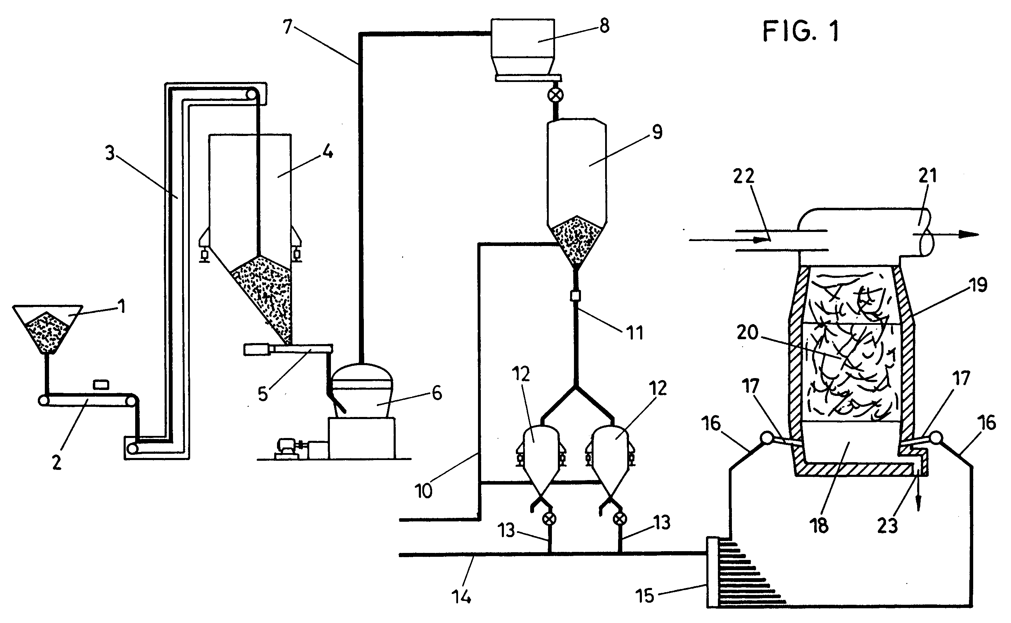

In Fig.1 ist ein Aufgabebunker für den Schreddermüll mit 1 bezeichnet. Von diesem Aufgabebunker 1 gelangt der Schreddermüll über Fördereinrichtungen 2 und 3 in einen Vorratsbunker 4 für Schreddermüll. Aus dem an seinem unteren Ende in Form einer Aufgabeschurre ausgebildeten Vorratsbunker 4 gelangt der Schreddermüll über einen Förderer 5 in eine Zerkleinerungsanlage für Schreddermüll 6. In dieser Zerkleinerungsanlage 6, insbesondere Mühle 6 wird der Schreddermüll auf eine Größe von maximal 2 - 3 mm gemahlen. Der aus der Zerkleinerungsanlage 6 abtransportierte gemahlene Schreddermüll wird in der Folge über Leitung 7, einem Zugabebunker 8 und von diesem Zugabebunker 8 in den Vorratsbunker 9 für gemahlenen Schreddermüll gefördert. Von dem Vorratsbunker 9 für gemahlenen Schreddermüll wird der Schreddermüll mit einem über Leitung 10 eingebrachten Fördermedium, welches vorzugsweise ein Trägergas z.B. Erdgas, Luft oder Stickstoff darstellt, über Leitung 11 in eine Schreddermüllsendeanlage 12 eingebracht. Aus der Schreddermüllsendeanlage 12 wird der Schreddermüll entweder abwechselnd aus je einem Teil der Sendeanlage 12 oder gleichzeitig aus beiden dieser Teilen dieser Anlage über Leitungen 13 unter Zugabe eines anderen Trägergases, welches über Leitung 14 in Leitung 13 eingeschleust wird, über einen schematisch dargestellten Verteiler 15 und Leitungen 16 mittels Zuführungsdüsen 17 in die Hochtemperaturzone 18 eines Schmelzreaktors 19 eingeblasen. Der bei der Verbrennung des Schreddermülls entstehende Abgasstrom wird hiebei zur Vorwärmung der Schrottsäule 20 in den Reaktor 19 herangezogen und über einen Abgasaustrag 21 einer nicht angestellten Abgasaufbereitung zugeführt.

Die Chargiereinrichtung für die Zugabe von Schrott in den Schrottschmelzreaktor 20 ist hiebei in Fig. 1 schematisch mit 22 angedeutet. Über diese Schrottzuführungseinrichtung 22 wird der Schrott kontinuierlich dem Schrottschmelzreaktor aufgegeben. Auch die Schmelze wird aus dem Reaktor 19 kontinuierlich über die schematisch angedeuteten Abstich 23 ausgetragen.

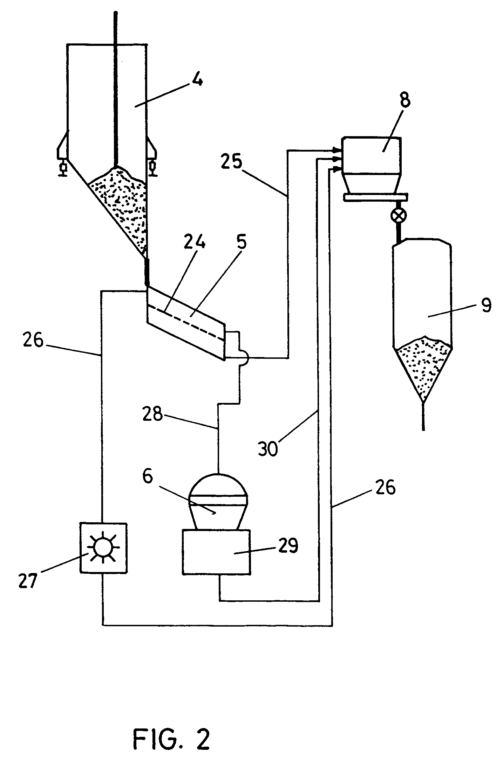

In Fig. 2 ist die Einrichtung zum Mahlen bzw. Zuführen des Schredderschrottes in den Vorratsbunker für gemahlenen Schredderschrott detaillierter dargestellt. In Fig. 2 wurden im übrigen die Bezugszeichen von Fig. 1 beibehalten. Der aus dem Vorratsbunker 4 dem Förderer 5 aufgegebene Schredderschrott wird hiebei in dem Förderer 5 klassiert. Der Förderer 5 ist hiebei als Siebbandförderer ausgebildet, wobei die Maschenweite des schematisch angedeuteten Siebes 24 vorzugsweise 2 mm beträgt. Die Fraktion des Schredderschrottes, welche eine Korngröße von kleiner 2 mm aufweist, wird in der Folge nach dem Siebdurchgang aus dem Förderer 5 abgezogen und direkt über Leitung 25 dem Zugabebunker 8 für gemahlenen Schreddermüll zugeführt. Schreddermüll mit einer Korngröße von mehr als 2 mm wird in dem Förderer 5 in eine Spröd- und in eine Weichfraktion getrennt. Die Sprödfraktion wird hiebei am Eintritt in den Förderer 5 abgezogen und über Leitung 26, in welche ein schematisch angedeutetes Saugzuggebläse 27 eingeschaltet ist, dem Zugabebunker 8 für den Schreddermüll zugeführt. Eine weitere Vermahlung der Sprödfraktion des Schreddermülls auf kleinere Korngrößen ist nicht erforderlich. Die Weichfraktion des Schreddermülls, welche eine Korngröße von größer als 2mm aufweist, wird über Leitung 28 der Mühle 6 zugeführt. In der Mühle 6 wird diese Weichfraktion kryogen vermahlen, wobei die Kühlung des Schredderschrottes in der Mühle 6 mit Hilfe von flüssigem Stickstoff vorgenommen wird. Die aus der Mühle 6 ausgetragene, auf Korngrößen kleiner 2 mm vermahlene Weichfraktion des Schreddermülls wird aus einer Sammeleinrichtung 29 über Leitung 30 ebenfalls dem Zugabebunker 8 für Schreddermüll zugeführt und von diesem direkt in den Vorratsbunker 9 für gemahlenen Schreddermüll eingebracht.

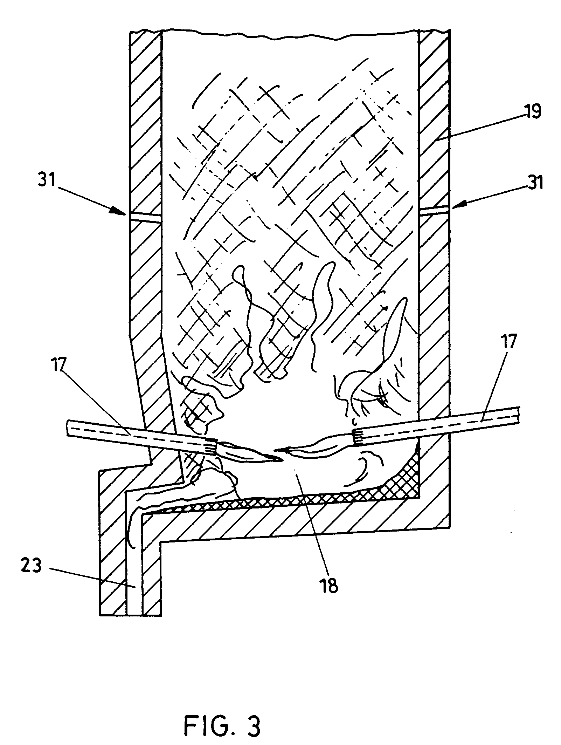

In Fig. 3 ist die Schmelzzone des Schrottschmelzreaktors 19 detaillierter dargestellt, wobei auch hier die Bezugszeichen von Fig. 1 soweit als möglich unverändert beibehalten wurden. In die Schmelzzone 18 des Schrottschmelzreaktors 19 wird über die Düsen 17 der gemahlene Schreddermüll eingeblasen. Die Düsen 17 enden hiebei vorzugsweise etwa 20 cm über dem Bad der Schmelze und es wird in der Schmelzzone eine Temperatur von 2500 bis 3000°C aufrecht erhalten. Der gemahlene Schreddermüll wird in die Düsen 17 mit einer Temperatur von unter 10°C eingeblasen, und das Einblasen erfolgt hiebei zusammen mit den erforderlichen Brennstoffen, um den Schreddermüll in der Schmelzzone des Schrottschmelzreaktors 19 direkt zu verbrennen. Die Düsen 17 können hiebei als Ringdüsen ausgebildet werden. Über der Verbrennungszone des Schredderschrottes münden in den Schrottschmelzreaktor 19 schematisch dargestellte Düsen 31 für die Zufuhr von Sekundärluft. Am Fuße des Schrottschmelzreaktors 19 befindet sich ein kontinuierlicher Abstich 23, aus welchem die Metallschmelze und die Schlacke kontinuierlich abgezogen werden.

## Patentansprüche

1. Verfahren zur energetischen Nutzung von Schreddermüll in einem kontinuierlichen Schrottschmelzverfahren, dadurch gekennzeichnet, daß der Schreddermüll auf eine Korngröße von unter 3 mm, vorzugsweise unter 2 mm, zerkleinert wird und gemeinsam mit einem Trägergas, wie z.B. Erdgas, Luft oder Stickstoff, in die Hochtemperaturschmelzzone (18) des Schrottschmelzreaktors (19) eingeblasen wird.

2. Verfahren nach Anspruch 1, dadurch gekennzeichnet, daß das Einblasen über Ringdüsen (17) vorgenommen wird, deren Düsenachsen zur Achse des Schrottschmelzreaktors (19) nach unten geneigt verlaufen und mit einer Radialebene einen Winkel von 2 bis 10°, vorzugsweise etwa 7°, einschließen.

3. Verfahren nach Anspruch 1 oder 2, dadurch gekennzeichnet, daß in den Schrottschmelzreaktor (19) oberhalb der Ebene, in welcher der Schreddermüll eingeblasen wird, in einer Zone, in welcher die Temperatur unter 700°C liegt, Sekundärluft eingeblasen wird.

4. Verfahren nach Anspruch 1, 2 oder 3, dadurch gekennzeichnet, daß der Schreddermüll vor der Zerkleinerung (6) einer Sichtung und/oder Siebung (5) unterworfen wird und die eine Korngröße größer 3 mm, vorzugsweise größer 2 mm, aufweisenden Fraktion in eine Spröd- und eine Weichfraktion getrennt wird, worauf die Sprödfraktion in einer Mühle (6) zerkleinert wird und die Weichfraktion zusätzlich vor oder während der Zerkleinerung (6), beispielsweise mit flüssigem Stickstoff gekühlt wird.

5. Verfahren nach einem der Ansprüche 1 bis 4, dadurch gekennzeichnet, daß als Düsen (17) für das Einblasen des Schreddermülls Manteldüsen eingesetzt werden, wobei der Schreddermüll über ein zentrales Rohr, Sauerstoff über ein erstes konzentrisches Rohr und weiterer gasförmiger Brennstoff über ein weiteres konzentrisches Rohr eingeblasen wird.

6. Verfahren nach Anspruch 5, dadurch gekennzeichnet, daß in wenigstens einem der das zentrale Rohr umgebenden Rohre der Schreddermühl durch Drallkörper durchwirbelt wird.

## Claims

1. A process for the energetic utilisation of shredder waste in a continuous scrap melting process, characterised in that the shredder waste is comminuted to a particle size of less than 3 mm, preferably less than 2 mm, and together with a carrier gas, for example natural gas, air or nitrogen, is blown into the high-temperature melting zone (18) of the scrap melting reactor (19).

2. A process according to Claim 1, characterised in that the blowing-in takes place through a ring of nozzles (17), the nozzle axes of which extend downwardly inclined in relation to the axis of the scrap melting reactor (19) and form an angle of 2 to 10°, preferably about 7°, with a radial plane.

3. A process according to Claim 1 or 2, characterised in that secondary air is blown into the scrap melting reactor (19) above the plane in which the shredder waste is blown in, in a zone in which the temperature is below 700°C.

4. A process according to Claim 1, 2 or 3, characterised in that, prior to the comminution (6), the shredder waste undergoes screening and/or sieving (5) and the fraction having a particle size of more than 3 mm, preferably more than 2 mm, is separated into a brittle fraction and a soft fraction, whereupon the brittle fraction is comminuted in a mill (6) and the soft fraction is additionally cooled before or during the comminution (6), for example with liquid nitrogen.

5. A process according to any one of Claims 1 to 4, characterised in that sheathed nozzles are used as the nozzles (17) for the blowing-in of the shredder waste, wherein the shredder waste is blown in through a central tube, oxygen through a first concentric tube and additional gaseous fuel through a further concentric tube.

6. A process according to Claim 5, characterised in that within at least one tube surrounding the central tube turbulence is imparted to the shredder waste by swirl members.

## Revendications

1. Procédé d'utilisation énergétique de déchets de ferrailles déchiquetées dans un procédé continu de fusion de ferrailles, caractérisé en ce qu'on fragmente les déchets de ferrailles déchiquetées en des morceaux d'une taille inférieure à 3 mm et de préférence inférieure à 2 mm et qu'on les injecte par soufflage, conjointement avec un gaz porteur, comme par exemple du gaz naturel, de l'air ou de l'azote, dans la zone de fusion à haute température (18) du réacteur (19) de fusion des ferrailles.

2. Procédé selon la revendication 1, caractérisé en ce que l'injection par soufflage est exécutée par l'intermédiaire de buses annulaires (17), dont les axes sont inclinés vers le bas en direction de l'axe du réacteur (19) de fusion des ferrailles et font, avec un plan radial, un angle compris entre 2 et 10° et égal de préférence à environ 7°.

3. Procédé selon la revendication 1 ou 2, caractérisé en ce qu'on injecte de l'air secondaire dans le réacteur (19) de fusion des ferrailles, au-dessus du plan, dans lequel sont injectés par soufflage les déchets de ferrailles déchiquetées, et ce dans une zone dans laquelle la température est inférieure à 700°C.

4. Procédé selon la revendication 1, 2 ou 3, caractérisé en ce qu'on soumet les déchets de ferrailles déchiquetées, avant la fragmentation (6), à un tri et/ou à un tamisage (5), et la fraction, qui possède une taille supérieure à 3 mm et de préférence supérieure à 2 mm, est subdivisée en une fraction cassante et en une fraction molle, à la suite de quoi la fraction cassante est fragmentée dans un broyeur (6) et la fraction molle est refroidie en supplément avant ou pendant la fragmentation (6), par exemple à l'aide d'azote liquide.

5. Procédé selon l'une des revendications 1 à 4, caractérisé en ce qu'on utilise, comme buses (17) pour l'injection par soufflage des déchets de ferrailles déchiquetées, des buses à enveloppe, les déchets de ferrailles déchiquetées étant injectés par soufflage par l'intermédiaire d'un tube central, de l'oxygène étant injecté par soufflage par l'intermédiaire d'un premier tube concentrique et un autre combustible gazeux étant injecté par l'intermédiaire d'un autre tube concentrique.

6. Procédé selon la revendication 5, caractérisé en ce que dans au moins l'un des tubes entourant le tube central, les déchets de ferrailles déchiquetées sont entraînés en tourbillonnement par des corps d'entraînement en tourbillonnement.
